# EUROPÄISCHE PATENTSCHRIFT

(11) **EP 3 121 485 B1**
(45) Veröffentlichungstag und Bekanntmachung des Hinweises auf die Patenterteilung: **13.10.2021**
(21) Anmeldenummer: 15177847.9
(22) Anmeldetag: 22.07.2015
(51) Int. Cl.: F16H 57/02, F15B 13/08, F16H 19/04

(54) **KOMPAKTER ELEKTRISCHER LINEARANTRIEB FÜR EINE ZAHNSTANGE, INSBESONDERE EINES HYDRAULIKVENTILS, UND VERFAHREN ZU SEINER MONTAGE**
COMPACT ELECTRIC LINEAR DRIVE FOR A GEAR RACK, IN PARTICULAR OF A HYDRAULIC VALVE, AND METHOD FOR FITTING IT
ENTRAINEMENT LINEAIRE ELECTRIQUE COMPACT POUR UNE CREMAILLERE, EN PARTICULIER D'UNE SOUPAPE HYDRAULIQUE, ET SON PROCEDE DE MONTAGE

(43) Veröffentlichungstag der Anmeldung: 25.01.2017
(73) Patentinhaber: Bucher Hydraulics GmbH, 79771 Klettgau (DE)
(72) Erfinder: Rüsing, Frank, 42477 Radevormwald (DE)
(74) Vertreter: Kahlhöfer, Hermann

(56) Entgegenhaltungen:
- WO-A1-2015/083350
- DE-U1- 29 513 701
- US-A- 3 992 956
- US-A1- 2008 121 828

## Beschreibung

Die vorliegende Erfindung betrifft einen elektrischen Linearantrieb für eine Zahnstange eines anzutreibenden Gerätes. Ein typisches Bespiel für eine solche Antriebsaufgabe ist in der US 2008/0121830 A1 beschrieben. Dort sollen mehrere dicht aneinander liegende Hydraulikventile mittels Zahnstangen betätigt werden, wofür entsprechende flache, scheibenförmige Antriebe mit jeweils einem flachen Schrittmotor vorhanden sind.

Von diesem Stand der Technik geht die vorliegende Erfindung aus. Ein Ziel ist es, einen kompakten Antrieb zu schaffen, der für die in der US 2008/0121830 A1 beschriebene Aufgabe, aber auch für andere Aufgaben geeignet ist. Insbesondere soll eine Individualisierung für nur eine Antriebsaufgabe vermieden werden, so dass unterschiedliche Geräte angetrieben werden können. Außerdem soll ein einfach aufgebauter, robuster und leicht zu montierender elektrischer Linearantrieb geschaffen werden, welcher als Einheit einfach an ein anzutreibendes Gerät und eine elektrische Versorgung und Steuerung angeschlossen werden kann.

Zur Lösung dieser Aufgaben dient ein elektrischer Linearantrieb gemäß dem unabhängigen Anspruch 1. Ein vorteilhaftes Verfahren zu seiner Montage ist im abhängigen Anspruch 9 angegeben. Vorteilhafte Ausgestaltungen, die einzeln und in technisch sinnvollen Kombinationen miteinander Verwendung finden können sind in den jeweils abhängigen Ansprüchen angegeben.

Ein erfindungsgemäßer elektrischer Linearantrieb für eine Zahnstange eines Hydraulikventils weist die Merkmale des Anspruchs auf.

Auf diese Weise entsteht ein Linearantrieb, der leicht vormontiert und erst nach seiner Montage mit einem anzutreibenden Gerät verbunden werden kann. Dabei bildet die Halteplatte gleichzeitig eine Befestigungsstruktur für verschiedene Komponenten und einen Teil des Gesamtgehäuses, wodurch die Zahl der Bauteile und die Montage vereinfacht werden. Dieses Konzept erlaubt es, dass eine später anzutreibende Zahnstange nur in dem anzutreibenden Gerät geführt bzw. gelagert ist, so dass sie frei in das Gesamtgehäuse eingeführt werden kann. Es ist allerdings auch möglich, ein Gegenlager für die Zahnstange im Gesamtgehäuse vorzusehen.

In einer bevorzugten Ausführungsform ist zusätzlich eine Antriebselektronik an der Halteplatte befestigt, insbesondere in diese integriert, und zwar so, dass elektrische Anschlüsse außen am Gesamtgehäuse (16) vorhanden sind. Die elektrischen Anschlüsse dienen der Spannungsversorgung und der Verbindung mit einer Steuerung, wobei die Kommunikation mit der Steuerung vorzugsweise über ein Bussystem erfolgt. In dieser Ausführungsform enthält das Gesamtgehäuse also auch die für den Betrieb des Schrittmotors erforderliche Elektronik, gegebenenfalls einschließlich Überwachungs- und Sicherheitsfunktionen.

Bei einer weiteren bevorzugten Ausführungsform weist der Schrittmotor eine Rotorachse auf, welche parallel zur Halteplatte und senkrecht zur anzutreibenden Zahnstange angeordnet ist. Diese Anordnung unterscheidet sich von dem bekannten Stand der Technik sehr flacher Linearantriebe dadurch, dass die Rotorachse nicht in Richtung der geringsten Ausdehnung des Gesamtgehäuses liegt, sondern senkrecht dazu. Eine solche Anordnung wurde bei flachen Linearantrieben eher nicht in Betracht gezogen, weil man glaubte, dass die für viele Anwendungen erforderlichen Drehmomente von Schrittmotoren mit kleinen Durchmessern nicht aufgebracht werden könnten. Überraschenderweise lässt sich jedoch auch mit einem Schrittmotor mit kleinem Durchmesser und dafür größerer axialer Länge in Verbindung mit einem Getriebe ein für die meisten Anwendungen genügendes Drehmoment erzeugen bei gleichzeitig hoher Positioniergenauigkeit. Außerdem entsteht in der Ebene der Halteplatte noch zusätzlicher freier Raum, in dem außer einem Getriebe auch eine Antriebselektronik vollständig untergebracht werden kann.

Der erfindungsgemäße Linearantrieb weist ein Getriebe mit mindestens einer Getriebewelle und mit zwei Zahnrädern sowie eine Lagerung, vorzugsweise in Form einer Gegenlagerplatte, auf. Die Getriebeachse kann dabei in paralleler Richtung zur Rotorachse des Schrittmotors angeordnet werden, wobei eines der Zahnräder des Getriebes mit dem Motorabtriebszahnrad kämmt, während ein anderes in Eingriff mit einer später einzuführenden Zahnstange eines anzutreibenden Gerätes gebracht werden kann. Soweit es die Platzverhältnisse erlauben, kann das Übersetzungsverhältnis des Getriebes an die gewünschte Anwendung angepasst werden.

Bei einer weiteren bevorzugten Ausführungsform des erfindungsgemäßen Linearantriebs ist das Grundgehäuse topfförmig ausgebildet und weist eine im Wesentlichen in einer Ebene verlaufende Fuge, vorzugsweise mit einer Fugendichtung, zu der deckelförmig zu dem topfförmigen Grundgehäuse ausgebildeten Antriebseinheit auf. Bei typischen Gehäusen für Linearantriebe werden die Komponenten in einem topfförmigen Gehäuse montiert, wobei oft auch schon das anzutreibende Gerät montiert werden muss, bevor das Gehäuse mit einem Deckel verschlossen wird. Gemäß der vorliegenden Erfindung bildet das Grundgehäuse ein leeres Volumen, in das an der Halteplatte befestigte Komponenten eingeführt werden, wenn die Halteplatte, die gleichzeitig quasi den Deckel für das Grundgehäuse bildet, aufgesetzt wird. Dieser Aufbau hat verschiedene Vorteile bei der Montage und der Anzahl der erforderlichen Teile und Schritte. Außerdem kann so eine im Wesentlichen in einer Ebene verlaufende Fuge mit einer ebenen Dichtung gebildet werden, während eine von dieser Fuge völlig unabhängige Öffnung in dem Grundgehäuse für den späteren Anschluss eines anzutreibenden Gerätes, gegebenenfalls mit einer eigenen Dichtung, vorgesehen werden kann.

Bevorzugt weist das topfförmige Grundgehäuse dazu eine seitliche Öffnung zum Einführen der Zahnstange eines anzutreibenden Gerätes und eine Zentriereinrichtung zum Zentrieren des Linearantriebs in Bezug auf die Zahnstange oder das von der Zahnstange anzutreibendes Gerät auf. Dieser Aufbau ermöglicht einen schnellen und exakten Zusammenbau des erfindungsgemäßen Linearantriebs mit einem anzutreibenden Gerät. Insbesondere bei der Anwendung zum Antrieb von dicht nebeneinander angeordnete Hydraulikventilen ist dieses Merkmal von Vorteil, da einzelne Linearantriebe bei einer solchen Anordnung ohne Ausbau der Nachbarantriebe ausgewechselt werden können, indem sie einfach von der Zahnstange in Richtung der Zahnstange abgezogen werden.

Bei Bedarf kann die Zahnstange auch von einem Gegenlager gegen das letzte Zahnrad des Getriebes gedrückt werden, was insbesondere dann von Vorteil ist, wenn die Zahnstange eingangsseitig mindestens ein Gelenk aufweist. Eine solche Anordnung mit gelenkiger Zahnstange lässt sich leichter montieren und erlaubt gewisse Abweichungen bei der gegenseitigen Ausrichtung von Linearantrieb und anzutreibendem Gerät.

Die Befestigung zwischen Linearantrieb und anzutreibendem Gerät erfolgt bevorzugt durch einen Flansch am Grundgehäuse, vorzugsweise mit einer Flanschdichtung, wobei die Zahnstange in das Innere des Gesamtgehäuses eingeführt und mit dem letzten Zahnrad des Getriebes in Eingriff gebracht (aber nicht notwendigerweise in dem Gesamtgehäuse gelagert) wird.

Der erfindungsgemäße Aufbau des Linearantriebs ermöglicht sehr kompakte Maße, wobei das Gesamtgehäuse flach gestaltet werden kann mit einem Verhältnis von Höhe : Länge : Breite von etwa 50 : 130 : 130, vorzugsweise mit absoluten Abmessungen kleiner als 50 mm Höhe, kleiner als 130 mm Länge und kleiner als 130 mm Breite. Das Gesamtgehäuse hat daher in einer Ebene eine nahezu quadratische Form und senkrecht dazu nur eine relativ geringe Höhe, was die scheibenweise Anordnung zum Antrieb einer Mehrzahl von nebeneinander angeordneten Geräten erleichtert.

Wie oben bereits erwähnt wird bevorzugt ein Schrittmotor mit einem außenliegenden Stator eingesetzt, der einen größten Durchmesser von weniger als 45 mm aufweist und dezentral auf der Halteplatte angeordnet ist, so dass neben ihm noch eine Antriebselektronik angeordnet werden kann. Dies nutzt den zur Verfügung stehenden Platz bei typischen Dimensionen für Linearantriebe dieser Art besonders gut aus.

Die Erfindung betrifft auch ein Verfahren zur Montage eines Linearantriebs gemäß Anspruch 9, nämlich eines Linearantriebs wie oben beschrieben. Das Verfahren umfasst folgende Schritte:
- ein Schrittmotor mit einem Motorabtriebszahnrad wird an einer Halteplatte befestigt,
- ein Getriebe wird an dem Schrittmotor und der Halteplatte befestigt,
- eine so entstehende Antriebseinheit wird mit einem Grundgehäuse zu einem Gesamtgehäuse zusammengebaut, so dass sich Schrittmotor und Getriebe im Gesamtgehäuse befinden.

Bei dieser Art des Zusammenbaus sind nur wenige Schritte erforderlich, weil die Halteplatte nicht nur einzelne Komponenten trägt, sondern gleichzeitig einen Teil des Gesamtgehäuses bildet.

Besonders vorteilhaft ist das Konzept der Erfindung, wenn auch noch eine Antriebselektronik vor dem Zusammenbau des Gesamtgehäuses so an der Halteplatte befestigt oder in diese integriert wird, dass elektrische Anschlüsse nach dem Zusammenbau außen am Gesamtgehäuse zu liegen kommen. Auf diese Weise entsteht mit wenigen Montageschritten ein fertiger kompakter Linearantrieb einschließlich seiner Antriebselektronik, der später nur noch mit einem anzutreibenden Gerät, einer Spannungsversorgung und einem Steuergerät verbunden werden muss. Dies geschieht nach dem Zusammenbau des Gesamtgehäuses, indem eine zu dem anzutreibenden Gerät gehörende Zahnstange in eine seitliche Öffnung des Gesamtgehäuses geschoben und das anzutreibende Gerät mit dem Gesamtgehäuse verbunden wird. Eine geeignete Zentriereinrichtung und gegebenenfalls eine Flanschdichtung sorgen dabei für eine korrekte und stabile Verbindung.
Besondere Vorteile entfaltet die Erfindung, wenn eine Mehrzahl von Linearantrieben nacheinander mit nahe nebeneinander oder sogar dicht aneinander liegenden anzutreibenden Geräten, insbesondere Hydraulikventilen, verbunden wird, so dass die Linearantriebe scheibenweise nebeneinander positioniert werden.

Weitere Einzelheiten und Ausführungsbeispiele der Erfindung werden im Folgenden anhand der Zeichnung näher erläutert, wobei die einzeln oder in bestimmten Kombinationen beschriebenen Komponenten auch in anderen technisch sinnvollen Kombinationen eingesetzt werden können.

Es zeigen:
- Fig.1: ein schematisches Explosionsbild der Komponenten eines Ausführungsbeispiels eines erfindungsgemäßen Linearantriebs vor dem Zusammenbau,
- Fig. 2: eine teilweise geschnittene Ansicht von oben auf einen erfindungsgemäßen Linearantrieb mit einem anzutreibenden Gerät,
- Fig. 3: einen Querschnitt durch die Anordnung nach Fig. 1 innerhalb des Gesamtgehäuses mit Ansicht der darin befindlichen Bauteile,
- Fig. 4: mechanische Komponenten einer Antriebseinheit in schematischer Ansicht vor dem Zusammenbau,
- Fig. 5: eine Seitenansicht von Grundgehäuse und montierter Antriebseinheit vor deren Zusammenbau,
- Fig. 6: eine fertig montierte Antriebseinheit in schematischer seitlicher, teilweise geschnittener Ansicht und
- Fig. 7: eine weiteres Ausführungsbeispiel einer fertig montierten Antriebseinheit in schematischer, teilweise geschnittener Ansicht mit einer von einem Gegenlager geführten und mit einem Gelenk versehenen Zahnstange.

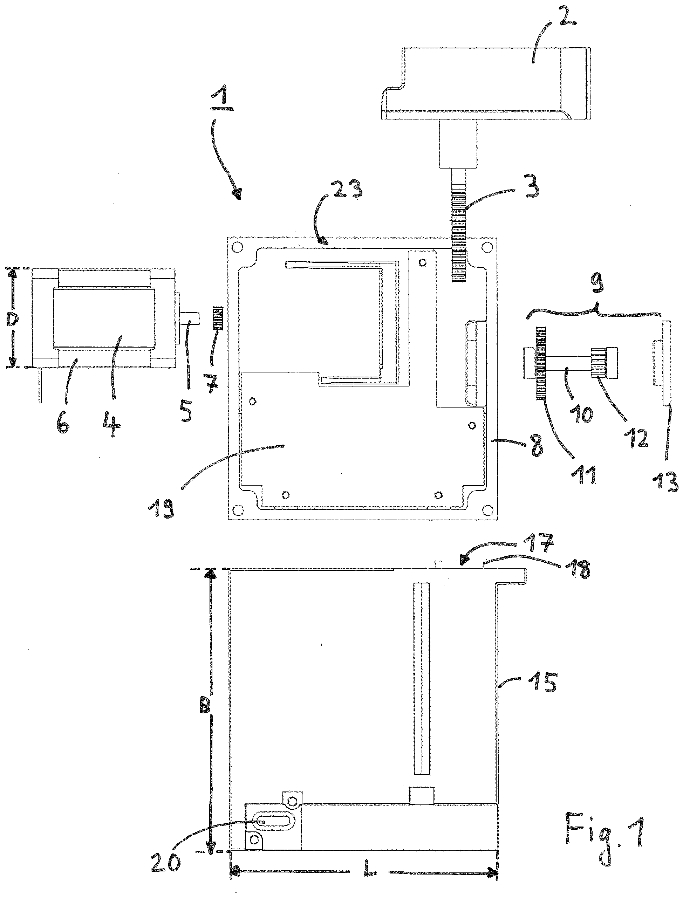

Fig. 1 zeigt in Form eines Explosionsbildes die wesentlichen Teile des erfindungsgemäßen Linearantriebs 1 für eine Zahnstange 3 und ihr Zusammenwirken mit einem anzutreibenden Gerät 2, aus welchem die Zahnstange 3 herausragt. Die Bezeichnungen der einzelnen Teile werden in allen Figuren beibehalten. Ein Schrittmotor 4 mit einem Stator 6, einer Rotorachse 5 und einem darauf zu befestigenden Motorabtriebszahnrad 7 kann an einer Halteplatte 8 befestigt werden. Ebenfalls an der Halteplatte 8 kann ein Getriebe 9 angebracht werden, welches eine Getriebewelle 1 mit darauf befestigtem erstem Zahnrad 11 und zweitem Zahnrad 12 aufweist. Die Getriebewelle wird zwischen dem Schrittmotor 4 und einer Gegenlagerplatte 13 gelagert. An der Halteplatte 8 wird außerdem eine Antriebselektronik 19 angebracht oder sogar in die Halteplatte 8 integriert (Halteplatte 8 und Antriebselektronik 19 bilden eine mechanische Einheit), und zwar so, dass später elektrische Anschlüsse 20 außen an einem Gesamtgehäuse 16 zu liegen kommen, welches nach dem Zusammenbau von der Halteplatte 8 und einem Grundgehäuse 15 entsteht. Sofern die Anschlüsse 20 außen am Grundgehäuse 15 angeordnet werden, muss eine hier nicht gesondert dargestellte geeignete Verbindung zwischen Antriebselektronik 19 und Anschlüssen 20 hergestellt werden, was durch übliche Techniken wie Kabel mit Steckverbindungen, Lötverbindungen und dergleichen vor dem Zusammenbau bewerkstelligt werden kann. Bei Datenleitungen sollte natürlich eine möglichst störungsfrei zu betreibende Verbindung vorgesehen werden. Die Halteplatte 8 formt zusammen mit dem Schrittmotor 4, dem Getriebe 9 und der Antriebselektronik 19 eine sehr kompakte Antriebseinheit 14, die in das topfförmige Grundgehäuse 15 eingesetzt werden kann, wobei die Halteplatte 8 eine Art flachen Deckel bildet, der eine ebene Fuge 23 mit dem Grundgehäuse 15 ausbildet. In diese ebene Fuge 23 kann beim Zusammenbau eine in Fig. 1 nicht dargestellte Fugendichtung 24 eingebracht werden, um das Gesamtgehäuse 16 aus Grundgehäuse 15 und Halteplatte 8 dicht zu verschließen. Das Grundgehäuse 15 weist eine seitliche Öffnung 17 auf, durch die die Zahnstange 3 des anzutreibenden Gerätes 2 in das Innere des Gesamtgehäuses 16 eingeführt und dort mit dem zweiten Zahnrad 12 des Getriebes 9 in Eingriff gebracht werden kann. Eine Zentriervorrichtung 18 am Grundgehäuse 15 mit einem entsprechenden Gegenstück am anzutreibenden Gerät 2 sorgt für eine exakte Positionierung der Zahnstange 3, die im vorliegenden Ausführungsbeispiel nicht im Gesamtgehäuse 16 gelagert oder geführt ist, sondern nur im anzutreibenden Gerät 2. Es ist aber auch möglich, im Gesamtgehäuse 16 ein Gegenlager auf der dem zweiten Zahnrad 12 gegenüberliegenden Seite der Zahnstange 3 vorzusehen.

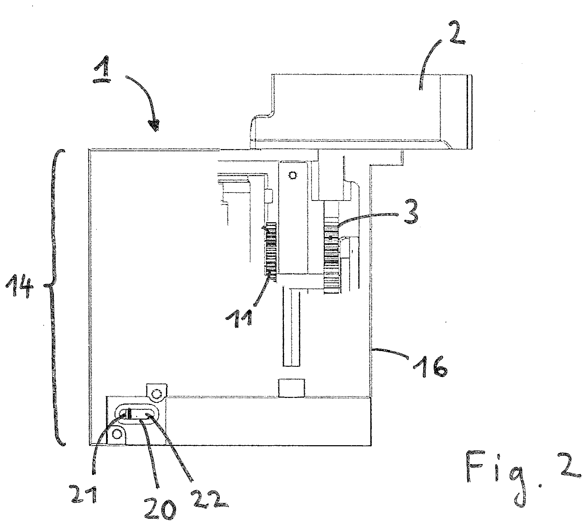

Fig. 2 zeigt in teilweise geschnittener Ansicht und schematisch das Zusammenwirken der Antriebseinheit 14 des erfindungsgemäßen Linearantriebs 1 mit dem anzutreibenden Gerät 2 in zusammengebautem Zustand. Die außen am Gesamtgehäuse 16 angebrachten elektrischen Anschlüsse 20 müssen nur eine Spannungsversorgung 21 und einen Anschluss 22 für ein Bussystem zur Ansteuerung der in dem Gesamtgehäuse 16 angeordneten Antriebselektronik 19 aufweisen.

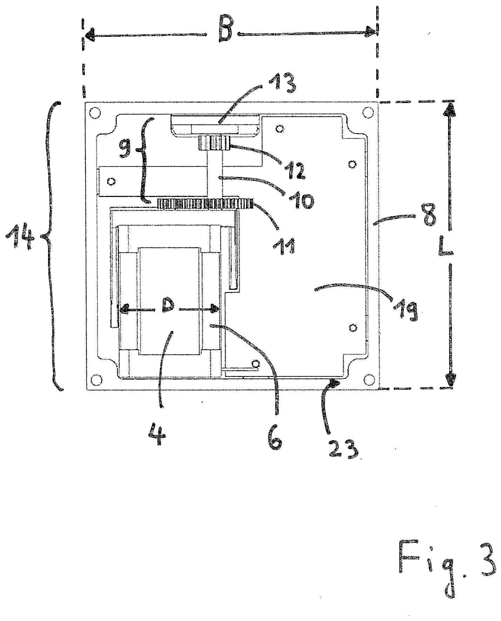

Fig. 3 veranschaulicht nochmals den Aufbau und die Größenverhältnisse der Antriebseinheit 14 in zusammengebautem Zustand. Man erkennt, dass nach dem Einbau des Schrittmotors 4, dessen Stator 6 einen Außendurchmesser D (bzw. bei etwa quadratischem Querschnitt eine entsprechende Querschnittsbreite) hat, der deutlich kleiner ist als die Breite B oder die Länge L der ungefähr quadratischen Halteplatte 8, neben dem Schrittmotor 4 und dem Getriebe 9 noch genügend Platz für die Antriebselektronik 19 verbleibt. Die axiale Länge des Stators ist bevorzugt etwa doppelt so groß wie sein Durchmesser bzw. seine Querschnittsbreite. Als absolute Maße im gezeigten Ausführungsbeispiel liegen eine Querschnittsbreite von etwa 26 mm und eine Statorlänge von etwa 55 mm vor.

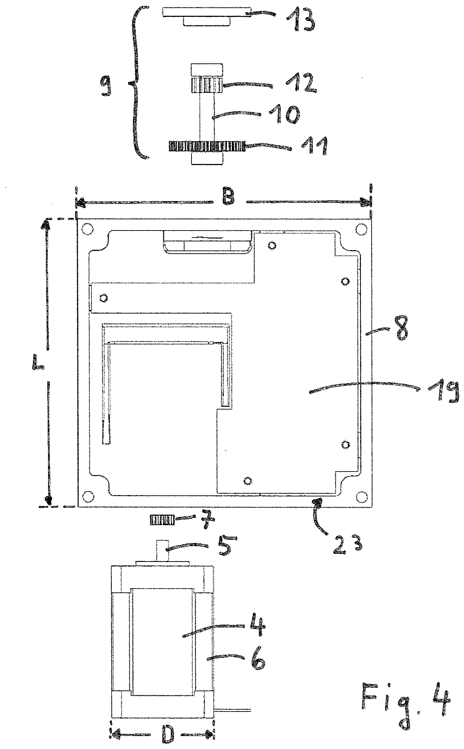

Fig. 4 zeigt in gleicher Weise wie Fig. 1 die Teile, die zu einer erfindungsgemäßen Antriebseinheit gehören.

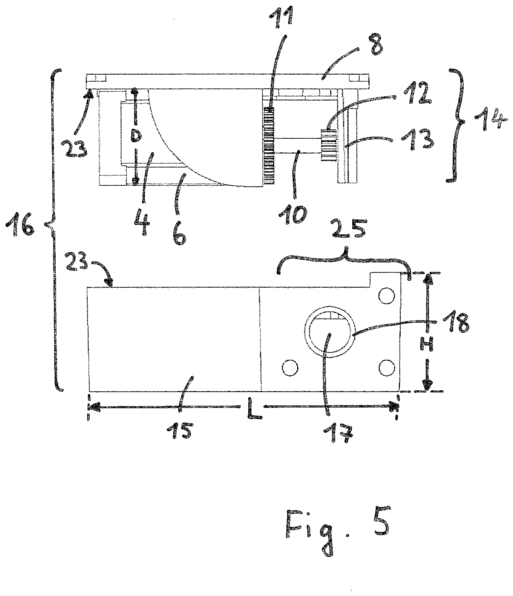

Fig. 5 zeigt in einer Seitenansicht die in den bisherigen Figuren noch nicht veranschaulichte relativ flache Bauform des gesamten Linearantriebs 1. Hier ist zu erkennen, dass das Grundgehäuse 15 topfförmig ist und eine Höhe H hat. Die Antriebseinheit 14, die quasi an der Halteplatte 8 hängt, kann von oben in das topfförmige Grundgehäuse 15 eingesetzt werden, so dass ein Gesamtgehäuse 16 entsteht und sich eine ebene Fuge 23 zwischen beiden Gehäuseteilen 8, 15 bildet. Der Durchmesser D des Stators 6 des Schrittmotors 4 ist kleiner als die Höhe H des Gesamtgehäuses 16, aber durch eine relativ große axiale Länge kann der Schrittmotor 4 in Verbindung mit dem Getriebe 9 dennoch die von einem solchen Linearantrieb 1 gewünschten Drehmomente aufbringen. Fig. 5 veranschaulicht auch den Unterschied zu anderen Konzepten im Stand der Technik, bei denen Schrittmotoren in flache Gehäuse eingebaut wurden. Bei der vorliegenden Erfindung liegt die Rotorachse 5 des Schrittmotors 4 nicht in Richtung der geringsten Ausdehnung, nämlich der Höhe H des Gesamtgehäuses 16, sondern senkrecht dazu. Außerdem wird nicht erst der Motor in ein topfförmiges Gehäuse eingebaut und mit einer Zahnstange in Eingriff gebracht, bevor das ganze durch einen Deckel verschlossen wird. Bei der vorliegenden Erfindung kann eine Zahnstange 3 durch eine seitliche Öffnung 17 eingeführt werden, nachdem das Gesamtgehäuse 16 geschlossen ist. Die Zahnstange 3 wird durch eine Zentriereinrichtung 18 in eine korrekte Lage gebracht. Ein Flansch 25 am Gesamtgehäuse 16 erlaubt die Befestigung eines anzutreibenden Gerätes 2.

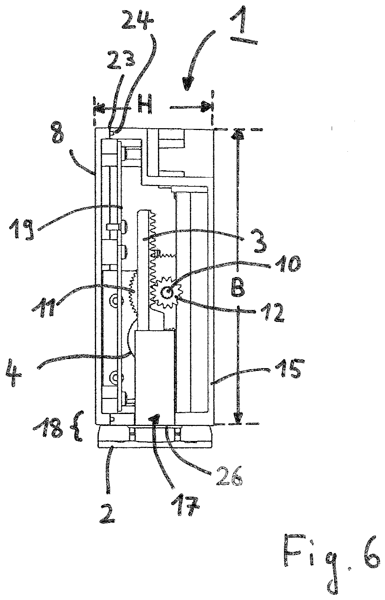

Fig. 6 zeigt ebenfalls in seitlicher, teilweise geschnittener Ansicht, aber aus einer anderen Richtung als Fig. 5 einen erfindungsgemäßen Linearantrieb 1 in zusammengebautem Zustand und mit angedeutetem angeflanschtem anzutreibenden Gerät 2, so dass dessen Zahnstange 3 im Eingriff mit dem zweiten Zahnrad 12 des Getriebes 9 ist. Es wird erkennbar, dass die seitliche Anordnung des Schrittmotors 4 nicht nur Platz für eine Antriebselektronik 19 auf der Halteplatte 8 schafft, sondern auch viel Raum für die Bewegung der Zahnstange 3 lässt, so dass relativ große Antriebswege verwirklicht werden können. Man erkannt auch die topfförmige Gestalt des Grundgehäuses 15 und die ebene Fuge 23 zwischen Grundgehäuse 15 und Halteplatte 8 mit angedeuteter Fugendichtung 24. Die Art der Dichtung ist aber von untergeordneter Bedeutung und kann von den zu beherrschenden Umgebungs- und Temperaturbedingungen abhängen.

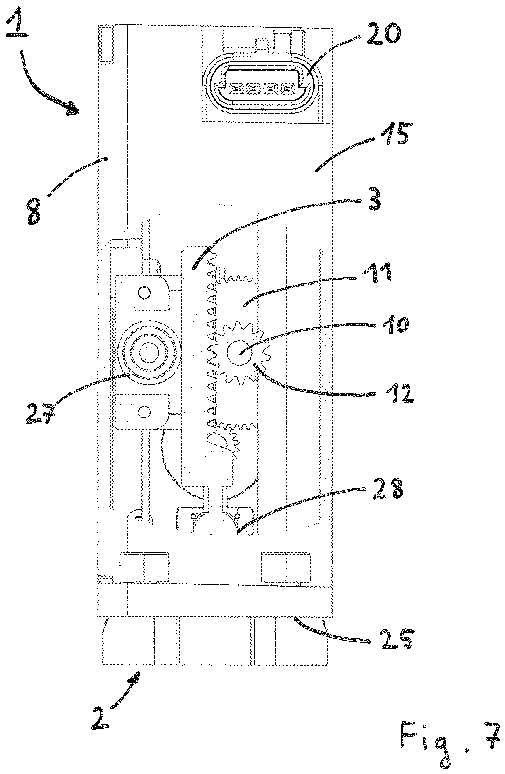

Fig. 7 zeigt in gleicher Ansicht wie Fig. 6 ein weiteres Ausführungsbeispiel der Erfindung, bei dem die Zahnstange 3 mit einem Gelenk 28, vorzugsweise einem Kugelgelenk, versehen ist und von einem Gegenlager 27 geführt und gegen das zweite Zahnrad 12 des Getriebes 9 gedrückt wird. Diese Ausführungsform erleichtert den Zusammenbau des erfindungsgemäßen Linearantriebs 1 mit einem anzutreibenden Gerät 2 und erlaubt gewisse Toleranzen bei der Ausrichtung dieser beiden Teile, ohne die Genauigkeit der Führung einzuschränken.

Der erfindungsgemäße Linearantrieb kann sehr kompakt sein, insbesondere mit Maßen von beispielsweise einer Höhe H von etwa 48 mm, und einer Lange L sowie einer Breite B von jeweils etwa 120 mm. Dadurch eignet sich der erfindungsgemäße Linearantrieb besonders für den Antrieb von Hydraulikventilen, die in einer Reihe nebeneinander angeordnet sind. Ein Auswechseln des Antriebs auch an einem inneren Hydraulikventil einer Reihe ist leicht möglich und bei einer integrierten Antriebselektronik kann auch der Aufwand an elektrischen Zuleitungen gering gehalten werden. Der erfindungsgemäße Linearantrieb kann aber problemlos auch für den Antrieb anderer Geräte eingesetzt werden, sofern diese eine geeignete eingebaute Zahnstange aufweisen.

### Bezugszeichenliste

- 1: Linearantrieb
- 2: Anzutreibendes Gerät, Hydraulikventil
- 3: Zahnstange
- 4: Schrittmotor
- 5: Rotorachse
- 6: Stator
- 7: Motorabtriebszahnrad
- 8: Halteplatte
- 9: Getriebe
- 10: Getriebewelle
- 11: Erstes Zahnrad
- 12: Zweites Zahnrad
- 13: Lagerung, Gegenlagerplatte
- 14: Antriebseinheit (deckelförmig)
- 15: Grundgehäuse (topfförmig)
- 16: Gesamtgehäuse
- 17: Öffnung
- 18: Zentriereinrichtung
- 19: Antriebselektronik
- 20: Elektrische Anschlüsse
- 21: Spannungsversorgung
- 22: Anschluss für Bussystem
- 23: Fuge
- 24: Fugendichtung
- 25: Flansch
- 26: Flanschdichtung
- 27: Gegenlager
- 28: Gelenk
- 29:

- H: Höhe
- L: Länge
- B: Breite
- D: Durchmesser des Stators bzw. Querschnittsbreite

## Patentansprüche

1. Elektrischer Linearantrieb (1) für eine Zahnstange (3) eines Hydraulikventils (2) aufweisend:
- einen Schrittmotor (4), wobei der Schrittmotor (4) eine Rotorachse (5) aufweist,
- eine Halteplatte (8),
- ein Motorabtriebszahnrad (7) und
- ein Getriebe (9) mit mindestens einer Getriebewelle (10) mit zwei Zahnrädern (11, 12) und einer Lagerung (13),
wobei Halteplatte (8), Schrittmotor (4) mit Motorabtriebszahnrad (7) und Getriebe (9) eine Antriebseinheit (14) bilden, die zusammen mit einem Grundgehäuse (15) ein Gesamtgehäuse (16) bilden,
wobei das Gesamtgehäuse (16) eine Öffnung (17) zum Einführen einer Zahnstange (3) aufweist, und wobei eine Getriebeachse der Getriebewelle (10) in paralleler Richtung zur Rotorachse (5) angeordnet ist, wobei ein erstes Zahnrad (11) mit dem Motorabtriebszahnrad (7) kämmt, wobei ein zweites Zahnrad (12) mit der über die Öffnung (17) einführbaren Zahnstange (3) eines anzutreibenden Gerätes in Eingriff bringbar ist,
**dadurch gekennzeichnet, dass**
die Rotorachse (5) senkrecht zur Richtung der geringsten Ausdehnung des Gesamtgehäuses (16) und senkrecht zur anzutreibenden Zahnstange (3) angeordnet ist.

2. Linearantrieb (1) nach Anspruch 1, wobei zusätzlich eine Antriebselektronik (19) an der Halteplatte (8) befestigt, insbesondere in diese integriert, ist, und zwar so, dass elektrische Anschlüsse (20) außen am Gesamtgehäuse (16) vorhanden sind.

3. Linearantrieb (1) nach Anspruch 1 oder 2, wobei die Rotorachse (5) parallel zur Halteplatte (8) angeordnet ist.

4. Linearantrieb (1) nach einem der vorhergehenden Ansprüche, wobei das Grundgehäuse (15) topfförmig ausgebildet ist und eine im Wesentlichen in einer Ebene verlaufende Fuge (23), vorzugsweise mit einer Fugendichtung (24), zu der deckelförmig zu dem topfförmigen Grundgehäuse (15) ausgebildeten Antriebseinheit (14) aufweist.

5. Linearantrieb (1) nach Anspruch 4, wobei das topfförmige Grundgehäuse (15) eine seitliche Öffnung (17) zum Einführen der Zahnstange (3) und eine Zentriereinrichtung (18) zum Zentrieren des Linearantriebs (1) in Bezug auf die Zahnstange (3) oder ein von der Zahnstange (3) anzutreibendes Gerät (2) aufweist.

6. Linearantrieb (1) nach einem der Ansprüche 4 oder 5, wobei das Grundgehäuse (15) einen Flansch (25), vorzugsweise mit einer Flanschdichtung (26), zum Anbringen eines die Zahnstange (3) aufweisenden Gerätes (2), insbesondere eines Hydraulikventils, aufweist.

7. Linearantrieb (1) nach einem der vorhergehenden Ansprüche, wobei das Gesamtgehäuse (16) flach gestaltet ist mit einem Verhältnis von Höhe (H) : Länge (L) : Breite (B) von etwa 50 : 130 : 130, vorzugsweise mit absoluten Abmessungen kleiner als 50 mm Höhe (H), kleiner als 130 mm Länge (L) und kleiner als 130 mm Breite (B).

8. Linearantrieb (1) nach einem der vorhergehenden Ansprüche, wobei der Schrittmotor (4) einen Stator (6) mit einem größten Durchmesser (D) bzw. einer Querschnittsbreite bei etwa quadratischem Querschnitt von weniger als 45 mm aufweist und dezentral auf der Halteplatte (8) angeordnet ist, so dass neben ihm noch eine Antriebselektronik (19) angeordnet werden kann.

9. Verfahren zur Montage eines Linearantriebs (1) gemäß einem der vorhergehenden Ansprüche, mit folgenden Schritten:
- ein Schrittmotor (4) mit einem Motorabtriebszahnrad (7) wird an einer Halteplatte (8) befestigt,
- ein Getriebe (9) wird an dem Schrittmotor (4) und der Halteplatte (8) befestigt,
- eine so entstehende Antriebseinheit (14) wird mit einem Grundgehäuse (15) zu einem Gesamtgehäuse (16) zusammengebaut, so dass sich Schrittmotor (4) und Getriebe (9) im Gesamtgehäuse (16) befinden.

10. Verfahren nach Anspruch 9, wobei eine Antriebselektronik (19) vor dem Zusammenbau des Gesamtgehäuses (16) so an der Halteplatte (8) befestigt oder in diese integriert wird, dass elektrische Anschlüsse (20) nach dem Zusammenbau außen am Gesamtgehäuse (16) zu liegen kommen.

11. Verfahren nach Anspruch 9 oder 10, wobei der Linearantrieb (1) nach dem Zusammenbau des Gesamtgehäuses (16) mit einem anzutreibenden Gerät (2) verbunden wird, indem eine zu dem anzutreibenden Gerät (2) gehörende Zahnstange (3) in eine seitliche Öffnung (17) des Gesamtgehäuses (16) geschoben und das anzutreibende Gerät (2) mit dem Gesamtgehäuse (16) verbunden wird.

12. Verfahren nach einem der Ansprüche 9 bis 11, wobei eine Mehrzahl von Linearantrieben (1) nacheinander mit dicht aneinander liegenden anzutreibenden Geräten (2), insbesondere Hydraulikventilen, verbunden wird, so dass die Linearantriebe (1) scheibenweise nebeneinander positioniert werden.

## Claims

1. Electric linear drive (1) for a gear rack (3) of a hydraulic valve (2), having:
- a stepping motor (4), wherein the stepping motor (4) has a rotor axle (5),
- a holding plate (8),
- a motor output gear wheel (7), and
- a gearing (9) with at least one gear shaft (10) having two gear wheels (11, 12), and a bearing arrangement (13),
wherein the holding plate (8), the stepping motor (4) with the motor output gear wheel (7) and the gearing (9) form a drive unit (14) which, together with a basic housing (15), forms an overall housing (16),
wherein the overall housing (16) has an opening (17) for inserting a gear rack (3), and
wherein a gear axle of the gear shaft (10) is arranged in a direction parallel to the rotor axle (5), wherein a first gear wheel (11) meshes with the motor output gear wheel (7),
wherein a second gear wheel (12) can be brought into engagement with the gear rack (3), which can be inserted via the opening (17), of a device to be driven,
**characterized in that**
the rotor axle (5) is arranged perpendicularly to the direction of the lowest extent of the overall housing (16) and perpendicularly to the gear rack (3) to be driven.

2. Linear drive (1) according to Claim 1, wherein there are additionally drive electronics (19) fastened to the holding plate (8), in particular integrated into the latter, specifically such that electrical connections (20) are present on the outside of the overall housing (16).

3. Linear drive (1) according to Claim 1 or 2, wherein the rotor axle (5) is arranged parallel to the holding plate (8).

4. Linear drive (1) according to one of the preceding claims, wherein the basic housing (15) is realized in the shape of a box and has a joint (23), extending substantially in one plane, preferably having a joint seal (24), to the drive unit (14) realized in the form of a cover to the box-shaped basic housing (15).

5. Linear drive (1) according to Claim 4, wherein the box-shaped basic housing (15) has a lateral opening (17) for inserting the gear rack (3), and has a centring device (18) for centring the linear drive (1) in relation to the gear rack (3) or a device (2) to be driven by the gear rack (3).

6. Linear drive (1) according to either of Claims 4 and 5, wherein the basic housing (15) has a flange (25), preferably having a flange seal (26), for attaching a device (2), in particular a hydraulic valve, having the gear rack (3).

7. Linear drive (1) according to one of the preceding claims, wherein the overall housing (16) is of a flat configuration having a height (H) : length (L) : width (B) ratio of approximately 50 : 130 : 130, preferably having absolute dimensions of less than 50 mm in height (H), less than 130 mm in length (L) and less than 130 mm in width (B).

8. Linear drive (1) according to one of the preceding claims, wherein the stepping motor (4) has a stator (6) with a greatest diameter (D), or a cross-sectional width in the case of, for instance, a square cross section, of less than 45 mm, and is arranged in a decentralized manner on the holding plate (8), such that drive electronics (19) can still be arranged next to it.

9. Method for mounting a linear drive (1) according to one of the preceding claims, having the following steps:
- a stepping motor (4) with a motor output gear wheel (7) is fastened to a holding plate (8),
- a gearing (9) is fastened to the stepping motor (4) and the holding plate (8),
- a drive unit (14) produced in this way is assembled with a basic housing (15) to form an overall housing (16), such that the stepping motor (4) and the gearing (9) are located in the overall housing (16).

10. Method according to Claim 9, wherein, prior to the assembling of the overall housing (16), drive electronics (19) are fastened to the holding plate (8) or integrated into the latter such that, following the assembling, electrical connections (20) lie on the outside of the overall housing (16).

11. Method according to Claim 9 or 10, wherein, following the assembling of the overall housing (16), the linear drive (1) is connected to a device (2) to be driven in that a gear rack (3) belonging to the device (2) to be driven is pushed into a lateral opening (17) of the overall housing (16) and the device (2) to be driven is connected to the overall housing (16).

12. Method according to one of Claims 9 to 11, wherein a plurality of linear drives (1) are connected in succession to devices (2) to be driven, in particular hydraulic valves, located close to each other, such that the linear drives (1) are positioned next to each other in a slice-type manner.

## Revendications

1. Entraînement linéaire électrique (1) pour une crémaillère (3) d'une soupape hydraulique (2) comprenant:
- un moteur pas à pas (4), le moteur pas à pas (4) comprenant un axe de rotor (5),
- une plaque de retenue (8),
- une roue dentée de sortie de moteur (7) et
- une transmission (9) dotée d'au moins un arbre de transmission (10) doté de deux roues dentées (11, 12) et d'un palier (13),
la plaque de retenue (8), le moteur pas à pas (4) avec la roue dentée de sortie de moteur (7) et la transmission (9) formant une unité d'entraînement (14) qui, conjointement avec un carter de base (15), forme un carter complet (16),
le carter complet (16) comprenant une ouverture (17) pour l'insertion d'une crémaillère (3), et un axe de transmission de l'arbre de transmission (10) étant disposé dans la direction parallèle à l'axe de rotor (5), une première roue dentée (11) s'engrenant avec la roue dentée de sortie de moteur (7), une deuxième roue dentée (12) pouvant être amenée en prise avec la crémaillère (3) d'un appareil à entraîner qui peut être insérée via l'ouverture (17),
**caractérisé en ce que**
l'axe de rotor (5) est disposé perpendiculairement à la direction de la plus petite étendue du carter complet (16) et perpendiculairement à la crémaillère (3) à entraîner.

2. Entraînement linéaire (1) selon la revendication 1, une électronique d'entraînement (19) étant en outre fixée à la plaque de retenue (8), en particulier intégrée dans celle-ci, et ce de sorte que des connexions électriques (20) soient présentes sur l'extérieur du carter complet (16).

3. Entraînement linéaire (1) selon la revendication 1 ou 2, l'axe de rotor (5) étant disposé parallèlement à la plaque de retenue (8).

4. Entraînement linéaire (1) selon l'une des revendications précédentes, le carter de base (15) étant réalisé en forme de pot et comprenant un assemblage (23), de préférence comprenant un joint d'étanchéité d'assemblage (24), s'étendant sensiblement dans un plan par rapport à l'unité d'entraînement (14) réalisée en forme de couvercle par rapport au carter de base (15) en forme de pot.

5. Entraînement linéaire (1) selon la revendication 4, le carter de base (15) en forme de pot comprenant une ouverture latérale (17) pour l'insertion de la crémaillère (3) et un dispositif de centrage (18) pour le centrage de l'entraînement linéaire (1) par rapport à la crémaillère (3) ou un appareil (2) devant être entraîné par la crémaillère (3).

6. Entraînement linéaire (1) selon l'une des revendications 4 ou 5, le carter de base (15) comprenant une bride (25), de préférence dotée d'un joint d'étanchéité de bride (26), pour l'installation d'un appareil (2) comprenant la crémaillère (3), en particulier d'une soupape hydraulique.

7. Entraînement linéaire (1) selon l'une des revendications précédentes, le carter complet (16) étant réalisé de manière plane avec un rapport de hauteur (H) : longueur (L) : largeur (B) d'approximativement 50 : 130 : 130, de préférence avec des dimensions absolues inférieures à 50 mm en hauteur (H), inférieures à 130 mm en longueur (L) et inférieures à 130 mm en largeur (B).

8. Entraînement linéaire (1) selon l'une des revendications précédentes, le moteur pas à pas (4) comprenant un stator (6) présentant un diamètre le plus grand (D) ou une largeur en section transversale, dans le cas d'une section transversale approximativement carrée, de moins de 45 mm et étant disposé de manière décentrée sur la plaque de retenue (8), de telle sorte qu'une électronique d'entraînement (19) puisse encore être disposée à côté de celui-ci.

9. Procédé de montage d'un entraînement linéaire (1) selon l'une des revendications précédentes, comportant les étapes suivantes :
- un moteur pas à pas (4) doté d'une roue dentée de sortie de moteur (7) est fixé à une plaque de retenue (8),
- une transmission (9) est fixée au moteur pas à pas (4) et à la plaque de retenue (8),
- une unité d'entraînement (14) ainsi produite est assemblée avec un carter de base (15) pour former un carter complet (16), de sorte que le moteur pas à pas (4) et la transmission (9) se trouvent dans le carter complet (16).

10. Procédé selon la revendication 9, une électronique d'entraînement (19) étant, avant l'assemblage du carter complet (16), fixée à la plaque de retenue (8) ou intégrée dans celle-ci, de telle sorte que des connexions électriques (20) viennent se placer sur l'extérieur du carter complet (16) après l'assemblage.

11. Procédé selon la revendication 9 ou 10, l'entraînement linéaire (1) étant, après l'assemblage du carter complet (16), relié à un appareil (2) à entraîner, par le fait qu'une crémaillère (3) appartenant à l'appareil (2) à entraîner est poussée dans une ouverture latérale (17) du carter complet (16) et l'appareil (2) à entraîner est relié au carter complet (16).

12. Procédé selon l'une des revendications 9 à 11, une pluralité d'entraînements linéaires (1) étant reliés tour à tour à des appareils (2) à entraîner étroitement adjacents, en particulier des soupapes hydrauliques, de sorte que les entraînements linéaires (1) soient positionnés les uns à côté des autres comme des disques.
